# EUROPEAN PATENT APPLICATION

(11) **EP 1 136 525 A1**
(43) Date of publication of application: **26.09.2001**
(21) Application number: 00106298.3
(22) Date of filing: 23.03.2000
(51) Int. Cl.: C08L 23/10, C08L 23/12

(54) **A compatibilizer and modifier for polymeric compositions comprising polyolefins**

(71) Applicant: THE PROCTER & GAMBLE COMPANY, Cincinnati, Ohio 45202 (US)
(72) Inventor: Rieger, Bernhard, Prof. Dr., 89075 Ulm (DE); Hanke, Bernhard, 65307 Bad Schwalbach (DE); Dyatlov, Valery Alexandrovich, 119034 Moscow (RU)
(74) Representative: Kohol, Sonia

(57) **Abstract**

A polymeric composition comprising a first, second and third component. Said first component being a first polymeric material comprising C2 to C20 linear or branched stereoregular polyolefins (isotactic polypropylene). The second component is a polymeric material comprising linear isotactic polymers having a structure of one or several C2 to C20 olefins, the isotacticity of the polymers in said second polymeric material due to a statistic distribution of stereoscopic error in the polymer chain. The third polymeric material comprises C2 to C20 linear or branched stereoregular polyolefins (atactic or syndiotactic polypropylene), the tacticity of said third polymeric material being different from the tacticity of the first polymeric material. The second polymeric material is a compatibilizer for the first and third polymeric material.

## Description

### Field of the invention

The present invention relates to polymeric compositions comprising at least one polyolefin and a compatibilizer and/or a modifier.

### Background

Stereoregular polypropylene and in particular isotactic polypropylene enjoys widespread usage throughout the industry. For example, isotactic polypropylenes, polymeric blends as well as plastic materials based on isotactic polypropylene are applied for the manufacture of films, fibers, bodies, foams, adhesives, coverings, and the like. The manufacture of isotactic polypropylene such as by metallocomplex catalysis polymerization reaction is well known in the art.

The manufacture of syndiotactic polypropylene and atactic polypropylene is also well known in the art. Due to their material properties, however, the latter two materials as such do not lend themselves to widespread industrial usage.

Isotactic polypropylene is a highly crystalline polymer. Accordingly, isotactic polypropylene is a brittle, stiff material with high tensile strength. It can be processed successfully without thermal destruction due to its low melting point. For the alteration of the material properties, however, for example a platicizer is required. Syndiotactic polypropylene is also a highly crystalline polymer but syndiotactic polypropylene is not thermally processable because of its high melting point. Atactic polypropylene is amorphous at room temperature and accordingly has poor mechanical properties and is sticky at room temperature.

It is a generally known technique to form compositions of polymers having different properties in order to adjust the material properties of the individual polymers. It is particularly desirable to mix polymers of the same monomer but with differing stereo chemistry. However, in the case of polyolefins and in particular in the case of polypropylene the known polymers having differing stereo chemistry are completely immiscible.

Therefore, it is an object of the present invention to provide a polymeric composition which overcomes the disadvantages of the prior art polymeric compositions.

It is a further object of the present invention to provide a polymeric composition in which the material properties of the basic polymeric can be adjusted by adding a variable amount of the same polymer with a different stereo chemistry, in particular with a polymeric composition comprising a polyolefin, preferably polypropylene.

It is a further object the present invention to provide a polymeric composition which comprises a first component and a second component which are immiscible and which comprises a third component acting as a compatibilizer to stabilize the polymeric composition.

It is a further object of the present invention to provide a method for blending two immiscible polymeric materials such as two polyolefins, in particular polypropylenes with differing stereo chemistry.

### Summary of the invention

### Detailed description of the invention

It is one aspect of the present invention to provide a polymeric composition in which the properties of the first component are adjustable by adding a variable amount of a second component.

The polymeric composition of the present invention comprises a first component which is a polymeric material comprising a C2 to C20 linear or branched stereo regular polyolefin. Preferably, the polyolefin is polypropylene. More preferably, the polypropylene is isotactic and, most preferably, the isotactic polypropylene is linear. The manufacture of this first component is well known in the art such as for example by metallocomplex catalysis polymerization.

The polymeric composition of the present invention further comprises a second component which is a polymeric material comprising linear or branched isotactic polymers having a structure of one or several C₂ to C₂₀ olefins. The isotacticity of the polymers, due to a statistic distribution of stereoscopic errors in the polymer chain, is within the range of from 25% to 60% of [mmmm] pentad concentration with the proviso that an arbitrary or rather regular sequence of isotactic and atactic blocks is excluded. The mean molecular weight M_{w} of the polymer is within the range of from 100000 to 800000 g/mol and the glass temperature T_{g} is between-50 and +30 °C. These polymers exhibit a semi-crystalline structure. The structure contains elastic amorphous areas of nano-scale-size reinforced with self arranged crystalline domains of nano-crystals. The formation of brittle, macro-crystalline material from the polymer is achieved by introducing the defects into the polymeric backbone. Isolated monomer units with opposite stereo configuration have been used as the defects, i.e. single stereo errors. The polymers and a process for manufacturing such polymers are described in PCT patent application EP99/02379 incorporated herein by reference. A catalyst combination suitable for the preparation of such polymers is described in PCT patent application EP99/02378 incorporated herein by reference. The number of stereo errors present in these polymers can be varied by choosing specific reaction conditions when synthesizing these polymers. In turn, the number of stereo errors in the main chain directly influences the structure of the main chain so that the properties of these polymers can be chosen to be close to isotactic polypropylene or to syndiotactic polypropylene or to atactic polypropylene. It is further possible, to adjust the properties of these polymers in between the properties of the known polypropylenes. Those polymers which have a structure in between two of the known polypropylene structures are soluble in and miscible with both of the two known polypropylenes. These polymers differ in their elastic-thermoplastic behavior from the state of the art as represented for example by EP-A- 0 707 016. In particular, the polymers suitable for the second component of the present invention have a distinctive rubber-elastic plateau in their tensile-strength curves. These polymers suitable for the second component of the polymeric composition of the present invention are bio-compatible and may be burnt without toxic residues since they contain no heteroatoms such as chlorine.

The specific chemistry of the polymeric composition of the second component is chosen to optimize the compatibility with the polymeric composition of the first component. Inventors have found that typically a second component which is based on the same monomer as the first component works well for the present invention.

The second component preferably is comprised in the polymeric composition of the present invention at a concentration of less than 50 percent by weight of the first component. Furthermore, the polymeric composition of the present invention preferably is comprising the second component at a concentration of at least five percent by weight of the first component. The specific concentration of the second component will be chosen by the skilled person with regard to the objective of the polymeric composition. The specific concentration of the second component allows to adjust the material properties of the final polymeric composition in particular in terms of mechanical properties and of processability.

It is a further aspect of the present invention to provide a polymeric composition comprising a first component and a second component as specified above and an additional third component. In this composition, the third component is intended to adjust the material properties of the first component and is typically immiscible with the first component. The second component in this composition act as a compatibilizer between the first component and the third component.

The third component is a polymeric material comprising a C2 to C20 linear or branched stereo regular polyolefin which is not freely miscible with the first component. Preferably, the polyolefin of the first component is polypropylene. More preferably, the polypropylene is linear. The manufacture of this third component is well known in the art such as for example by metallocomplex catalysis polymerization.

The third component preferably is comprised in the polymeric composition of the present invention at a concentration of less than 50 percent by weight of the first component. Furthermore, the polymeric composition of the present invention preferably comprises the third component at a concentration of at least 5 percent by weight of the first component. The specific concentration of the third component will be chosen by the skilled person with regard to the objective of the polymeric composition. The specific concentration of the third component allows to adjust the material properties of the final polymeric composition in particular in terms of mechanical properties and of processability.

In this polymeric composition, the second component acts as a compatibilizer between the first component and the third component. The second component preferably is present in this polymeric composition at a concentration of less than 50 percent by weight of the third component. Furthermore, the second component is preferably present in this polymeric composition at a concentration of at least five percent by weight of the third component. The specific concentration of the second component will be chosen by the skilled person with regard to the objective of the polymeric composition. In particular, the concentration of the second component has to be chosen sufficiently high in order to render the first component and the third component miscible with each other.

There are known in the art a wide variety of suitable methods to manufacture and /or to further process bodies from the polymer blends of the present invention including but not being limited to injection molding, extrusion blow molding, extrusion, casting, solution sedimentation, thermoforming, laser forming, carving, combination thereof, and the like.

It is a further aspect of the present invention to provide an article comprising a polymer blends according to the present invention.

The article according to the present invention may be a hygienic article. The term "hygienic article" as used herein refers to articles which are intended to be used in contact with or in proximity to the body of a living being. Such hygienic articles may be disposable or intended for multiple or prolonged use. Such hygienic articles include but are not limited to catheters, tubing, drainage systems, syringes, grafts, prosthetics, body implants, instrumentation, support means, toothbrushes, bed covers, stents, gaskets, pump diaphragms, baby bottle nipples, pacifiers, and the like. Having regard to the specific advantages of the polymers used for the articles of the present invention, it will be readily apparent to the skilled practitioner to apply the bodies of polymeric material according to the present invention in the above and similar hygienic articles.

The article according to the present invention may be a household article. The term "household article" as used herein refers to articles intended to be used when running a household. The household articles of the present invention include but are not limited to garbage bins, storage containers, hoses, toys, kitchenware, clothing, shoes, furniture in particular garden furniture, sporting goods, bellows, and the like. Having regard to the specific advantages of the polymers used for the articles of the present invention, it will be readily apparent to the skilled practitioner to apply the bodies of polymeric material according to the present invention in the above and similar household articles.

The article according to the present invention may further be an automotive part including but not being limited to bumper fascia, air dams, side moldings, fender flares. Grills, body panels, ducts, tires, vibration dampers, flexible joints, window seals, interior parts, door gaskets, automotive boots, and the like. Having regard to the specific advantages of the polymers used for the articles of the present invention, it will be readily apparent to the skilled practitioner to apply and to optionally modify the bodies of polymeric material according to the present invention in the above and similar automotive parts.

The polymer blends according to the present invention may also be used as a construction element in an article. Thereby, the functionalities of the body of polymeric material includes but is not limited to supporting, carrying, fixing, protecting other elements of the article and the like. Such articles include but are not limited to cover parts, complex constructions such as buildings (weather stripping, expansion joints, door gaskets and seals, water gaskets, window seals, hoses, ducts, tubes, wire and cable insulation, floor coverings, and the like), cars, household appliances, horticultural and agricultural constructions, and the like. Having regard to the specific advantages of the polymers used for the articles of the present invention, it will be readily apparent to the skilled practitioner to apply and to optionally modify the bodies of polymeric material according to the present invention as construction elements in the above and similar articles.

In general, the polymeric composition of the present invention is capable of replacing high art plastics for almost all purposes of the prior art plastics. Due to the adjust ability of the material properties of the polymeric composition of the present invention, the polymeric composition may be adapted to these purposes. In particular, the polymeric composition of the present invention are capable of replacing elastic or conformable plastics which has to be obtained by mixing platicizers into prior art polymers. While the prior art platicizers typically are toxic or at least incompatible with environment friendly disposal, the advantage of the polymeric composition of the present invention is that it overcomes the problems of prior art plastics comprising platicizers by being at least nontoxic, body tissue compatible, and may be burnt without toxic residues.

## Claims

1. A polymeric composition comprising a first component and a second component, said first component being a first polymeric material comprising C2 to C20 linear or branched stereoregular polyolefins, **characterized in that** said second component is a second polymeric material comprising linear isotactic polymers having a structure of one or several C₂ to C₂₀ olefins, the isotacticity of the polymers in said second polymeric material, due to a statistic distribution of stereoscopic errors in the polymer chain, being within the range of 25% to 60% of [mmmm] pentad concentration with the proviso that an arbitrary or rather regular sequence of isotactic and atactic blocks is excluded, the polymer in said second polymeric material having a mean molecular weight Mw within the range of from 100000 to 800000 g/mol and a glass temperature T_{g} of between -50 to +30 °C.

2. A polymeric composition according to claim wherein said polymeric composition comprises less than 50 percent by weight of said second component compared to said first component.

3. A polymeric composition according to claim wherein said first polymeric material is isotactic.

4. A polymeric composition according to claim wherein said first polymeric material comprises polypropylene.

5. A polymeric composition according to claim wherein said polymeric composition comprises a third component, said first component being a third polymeric material comprising C2 to C20 linear or branched stereoregular polyolefins, the tacticity of said third polymeric material being different from the tacticity of the first polymeric material.

6. A polymeric composition according to claim wherein said polymeric composition comprises less than 50 percent by weight of said third component compared to said first component.

7. A polymeric composition according to claim wherein said polymeric composition comprises less than 50 percent by weight of said second component compared to said third component.

8. A polymeric composition according to claim wherein said first polymeric material is isotactic and said first polymeric material is either syndiotactic or atactic.

9. A polymeric composition according to claim wherein said first polymeric material is polypropylene and said third polymeric material is polypropylene.

10. An article comprising the polymeric composition of any of the preceding claims.
